# EUROPÄISCHE PATENTSCHRIFT

(11) **EP 1 589 353 B1**
(45) Veröffentlichungstag und Bekanntmachung des Hinweises auf die Patenterteilung: **09.03.2011**
(21) Anmeldenummer: 05008009.2
(22) Anmeldetag: 13.04.2005
(51) Int. Cl.: G01S 7/481

(54) **Modul für ein Lasermessgerät mit Glasfasern und bidirektionaler optischer Verstärkung**
Module for a laser apparatus with optical and bidirectional amplification
Module pour un appareil laser avec fibre optique et amplification optique bidirectionnelle

(30) Priorität: 20.04.2004 DE 102004018974
(43) Veröffentlichungstag der Anmeldung: 26.10.2005
(73) Patentinhaber: Diehl BGT Defence GmbH & Co.KG, 88662 Überlingen (DE)
(72) Erfinder: Tholl, Hans Dieter, Dr., 88690 Uhldingen (DE); Baumann, Rainer, 88662 Überlingen (DE); Barenz, Joachim, Dr., 88690 Uhldingen (DE)
(74) Vertreter: Diehl Patentabteilung

(56) Entgegenhaltungen:
- WO-A-02/25248
- US-A- 5 835 199
- RADIC S ET AL: "FEASIBILITY OF HYBRID RAMAN/EDFA AMPLIFICATION IN BIDIRECTIONAL OPTICAL TRANSMISSION" IEEE PHOTONICS TECHNOLOGY LETTERS, IEEE INC. NEW YORK, US, Bd. 14, Nr. 2, Februar 2002 (2002-02), Seiten 221-223, XP001123195 ISSN: 1041-1135
- JAMES S W ET AL: "FIBRE OPTIC BASED REFERENCE BEAM LASER DOPPLER VELOCIMETRY" OPTICS COMMUNICATIONS, NORTH-HOLLAND PUBLISHING CO. AMSTERDAM, NL, Bd. 119, Nr. 5/6, 15. September 1995 (1995-09-15), Seiten 460-464, XP000521060 ISSN: 0030-4018
- MORVAN L ET AL: "Optically pre-amplified lidar-radar" PROCEEDINGS OF THE SPIE, SPIE, BELLINGHAM, VA, US, Bd. 4377, 2001, Seiten 284-293, XP002332680 ISSN: 0277-786X

## Beschreibung

Die Erfindung geht aus von einem Modul für ein Lasermessgerät gemäß dem Oberbegriff des Anspruchs 1. Ein solches Modul für ein Lasermessgeräts ist aus der WO 02/25248 A bekannt.

Aus der EP 1 335 457 A2 ist ein Ladar-System für Flugkörper bekannt, bei dem Licht aus zwei Laserquellen über einen dichroitischen Spiegel in eine als Faserverstärker ausgebildete Verstärkerstufe eingekuppelt wird. Dabei ist ein Trägerkörper vorgesehen, auf welchem der Faserverstärker aufgewickelt ist. Der Trägerkörper besteht aus einem Material mit hoher Temperaturleitfähigkeit, über das die Verlustwärme des Lasers abgeführt werden kann.

Aus der WO 03/098263 A2 ist ein Lidar-System mit mikromechanischen Spiegelelementen (z. B. MEMS-Spiegeln) bekannt.

Die WO 02/25882 A1 beschreibt die Quadratursignalverarbeitung von dopplerfrequenzverschobenen Signalen mittels eines Überlagerungsoszillators in einem Lidar-System.

Aus der US 5,694,408 A ist ein faseroptisches System mit einer Laserquelle bekannt. Ein erstes Lasersignal aus dieser Laserquelle wird aufgeteilt in mehrere zweite Lasersignale, welche schließlich wieder zu einem einzigen Lasersignal zusammengeführt werden, welches ein höheres Leistungsniveau als das erste, von der Laserquelle ausgesandte Signal aufweist.

Bei einer optischen Erkundung der Umgebung eines Luftfahrzeugs oder Flugkörpers kann es vorteilhaft sein, in dieser Umgebung erfasste interessierende Objekte mit einem aktiven Messstrahl abzutasten. Ein solcher aktiver Messstrahl kann ein Laserstrahl sein, dessen vom Objekt reflektierte Strahlung auf beispielsweise die Laufdauer, Phasenlage, Polarisation oder Frequenz untersucht wird.

Um den Bauraum für ein hierzu verwendetes Lasermessgerät klein zu halten, ist es wünschenswert, nur eine einzige Apertur zum Senden und Empfangen der Sendestrahlung und der empfangenden Strahlung zu verwenden. Hierbei besteht die Schwierigkeit, den Detektor des Lasermessgeräts vor innerhalb des Geräts unerwünscht reflektiertem Sendelicht zu schützen. Da der Unterschied der Empfindlichkeit des Detektors zur Leistung der Laserquelle mehrere Größenordnungen beträgt, ist eine Abschirmung des Detektors schwierig, insbesondere wenn das Lasermessgerät während des Betriebs Erschütterungen unterworfen ist.

Es ist daher die Aufgabe der vorliegenden Erfindung, ein Modul für ein Lasermessgerät anzugeben, das eine kompakte Bauweise des Lasermessgeräts erlaubt und gleichzeitig eine hohe Sicherheit gegen Blendungen des Detektors durch Streulicht gewährleistet.

Diese Aufgabe wird durch ein Modul für ein Lasermessgerät gemäß Anspruch 1 gelöst.

Die Erfindung geht von der Überlegung aus, dass das bezüglich Streulicht gefährlichste Bauelement des Lasermessgeräts das Koppelelement ist, durch den das Sendelicht der Laserquelle in den Sendeempfangslichtleiter eingespeist wird.

Die Erfindung geht außerdem von der Überlegung aus, dass mit einer geringen Sendelichtleistung die Gefahr einer Blendung des Detektors durch Streulicht gemildert werden kann. Die Gefahr von auf dem Detektor auftreffendem Streulicht kann somit verringert werden, wenn die Leistung des Sendelichts zum Zeitpunkt der Einspeisung in den Sendeempfangslichtleiter gering ist. Zur Vermeidung einer langen Integrationszeit ist daher eine nachträgliche Verstärkung des Sendelichts von Vorteil. Die Gefahr der Blendung des Detektors kann weiter reduziert werden, wenn der Detektor eine hohe Sättigungsleistung und mithin eine nur mäßige Empfindlichkeit aufweist. Hierzu sollte das Empfangssignal verstärkt werden.

Die Erfindung geht des Weiteren von der Überlegung aus, dass das Sendelicht und das Empfangssignal durch nur ein einziges Lichtverstärkeretement gemeinsam verstärkt werden können, wenn das Lichtverstärkerelement in einem gemeinsam genutzten Strahlengang angeordnet ist. Hierdurch können Bauteile und Bauraum eingespart werden. Durch die wirkungsmäßig Verbindung des Lichtverstärkerelements mit dem Sendeempfangslichtleiter können eine kompakte Bauweise und eine hohe Abstrahlleistung des Lasermessgeräts bei mäßiger Sendeleistung der Laserquelle und Empfindlichkeit des Laserdetektors und somit bei einem geringen Verblendungsrisiko des Laserdetektors erreicht werden.

Das Lasermessgerät kann zur Messung der Laufdauer, Phasenlage, Polarisation oder Frequenz des einfallenden Laserlichts vorgesehen sein, beispielsweise zum Zweck der Entfemungs- oder Geschwindigkeitsmessung, zur räumlichen Vermessung oder Abtastung der Oberflächenbeschaffenheit oder Absorptions- oder Streueigenschaften des interessierenden Objekts, einer Objektwolke, beispielsweise einer Aerosolwolke, oder zur Erzeugung einer Abbildung einer Objektszene. Unter Licht wird im Folgenden elektromagnetische Strahlung vom infraroten bis zum ultravioletten Frequenzbereich verstanden.

Eine besonders hohe Leistung von Sendestrahlung des Lasermessgeräts kann durch einen Pulsbetrieb des Lasermessgeräts erreicht werden. Hierzu ist das Lichtverstärkerelement zweckmäßigerweise mit einer Pumpquelle zum optischen Pumpen des Lichtverstärkerelements verbunden. Durch das optische Pumpen werden Elektronen im Lichtverstärkerelement auf ein energetisch erhöhtes Niveau angehoben und durch eine Anregung von Sendelicht der Laserquelle innerhalb eines kleinen Zeitintervalls abgeregt, wodurch eine Aussendung eines verstärkten Lichtpulses aus dem Lasermessgerät erfolgt.

Besonders einfach und kompakt ist ein Lichtverstärkerelement, das als Verstärkerfaser ausgebildet ist. Ein solcher Lichtleiter ist üblicherweise ein faserförmiges, dotiertes und insbesondere flexibles Element mit lichtleitenden Eigenschaften.

Das Koppelelement kann im einfachsten Fall als passiver faseroptischer Verbindungskoppler ausgebildet sein, bei dem zwei - oder ggf. auch mehr - Lichtleiter parallel aneinander gelegt und ein Stück weit zusammengeschmolzen sind. Die Strahlung aus der Laserquelle wird mit geringem Verlust in den Sendeempfangslichtleiter eingespeist, während das Empfangssignal mit mindestens 3 dB Verlust in den Empfangslichtleiter eingekoppelt wird.

Zweckmäßigerweise ist das Koppelelement ein Schaltelement, mit dem der Sendelichtleiter optisch vom Sendeempfangslichtleiter trennbar ist. Eine Strahlteilung des empfangenen Lichts und ein damit verbundener Verlust an Strahlungsleistung können vermieden werden.

Ein optisches Verschließen des Empfangslichtleiters kann durch ein Koppelelement erreicht werden, das als ein Schaltelement ausgestaltet ist, mit dem der Empfangslichtleiter optisch vom Sendeempfangslichtleiter trennbar ist. Der Detektor kann vor einfallender und unerwünschter Strahlung geschützt werden. Das Schaltelement kann ein optischer Zirkulator sein, das zeitlich hintereinander entweder die optische Verbindung zwischen dem Sendelichtleiter und dem Sendeempfangslichtleiter oder dem Sendeempfangslichtleiter und dem Empfangslichtleiter zulässt. Es ist auch möglich, das Schaltelement als elektrooptischen Schalter auszubilden, bei dem unter Ausnutzung des elektrooptischen Effekts die Veränderung des Brechungsindex n eines Materials des Schaltelements bei Anlegen einer Spannung zur Lichtstrahlablenkung verwendet wird.

Ein besonders geringer Strahlungsverlust durch das Koppelelement kann erreicht werden, wenn das Koppelelement ein mikrooptisches, insbesondere ein mikrooptomechanisches Element umfasst. Ein mikrooptisches Element kann eine schaltbare mikrooptische Gitterstruktur sein oder ein mikrooptischer Verschluss in Form eines so genannten "Flipping Pixels". Ein solches, auch als "Flixel" bezeichnetes optisches Verschlusselement erlaubt eine Schaltung zwischen zwei Zuständen, bei denen das Licht unpolarisiert und mit hohem Transmissionsgrad durch eine Öffnung durchtreten oder - nach Abdeckung der Öffnung - reflektiert werden kann. Ein mikrooptomechanisches Element weist eine bewegliche Mechanik auf, die durch einen mikromechanischen Antrieb, wie beispielsweise einen Piezoantrieb, angetrieben wird. Das Element kann ein Mikrospiegel sein, der digital zwischen zwei Zuständen schaltet oder als Schwinger ausgeführt ist. Es ist auch eine schwingende Mikrostimmgabel denkbar, bei der ein Spiegel oder eine Abdeckung vor einer Mikroblende nach dem Prinzip der Resonanzschwingung bewegt wird. Mikrooptische Elemente erlauben den Durchtritt von unpolarisiertem Licht und sind somit besonders geeignet zur Verwendung gemeinsam mit mehrwelligen bzw. mehrmodigen Lichtleitern.

Zweckmäßigerweise ist der Sendeempfangslichtleiter ein Mehrmodenleiter. Hierdurch kann eine geringe Empfindlichkeit des Lasermessgeräts gegen Erschütterungen erreicht werden, da die numerische Apertur eines Mehrmodenleiters größer ist als die numerische Apertur eines Einmodenleiters. Es kann eine einfache Einkopplung des Sendelichts oder eines Messsignals in den Lichtleiter erreicht werden. Außerdem können hohe Verstärkungsgrade durch das Lichtverstärkerelement erreicht werden.

Ein weiterer Vorteil wird erreicht, wenn der Empfangslichtleiter ein optisches Verschlusselement umfasst. Durch ein optisches Verschlusselement kann der Laserdetektor vor unerwünschtem Streulicht abgeschirmt werden. Das Verschlusselement ist schaltbar, so dass der Empfangslichtleiter während der Aussendung eines Lichtpulses durch die Laserquelle verschlossen und zum Empfang eines Messsignals geöffnet werden kann. Das Verschlusselement ist zusätzlich zum Koppelelement vorhanden, so dass der Laserdetektor vor störendem Streulicht, das vom Koppelelement erzeugt oder von diesem nicht abgehalten wird, abgeschirmt werden kann. Das Verschlusselement kann ein mikrooptisches Element sein.

Zweckmäßigerweise ist das Verschlusselement ein Lichtverstärker. Hierdurch kann das Empfangssignal nochmals verstärkt werden. Besonders vorteilhaft ist ein Verschlusselement auf Halbleiterbasis, das optisch gepumpt werden kann. In gepumptem Zustand ist das Verschlusselement transparent, so dass ein Empfangssignal durch das Verschlusselement hindurchtreten kann. Während der Aussendung von Sendelicht durch die Laserquelle ist das Verschlusselement zweckmäßigerweise in einem ungepumpten Zustand, in dem eintretendes Laserlicht vom Verschlusselement stark absorbiert wird. In diesem Zustand arbeitet das Verschlusselement als Lichtsperre. Die Sperrwirkung wird erst durch einen erneuten Pumppuls aufgehoben.

Die Erfindung schlägt außerdem vor, dass am Sendeempfangslichtleiter ein Lichtfilter angeordnet ist. Hierdurch kann auf das Lasermessgerät auftreffende Hintergrundstrahlung, die durch das Lichtverstärkerelement gegebenenfalls zusammen mit dem Messsignal verstärkt werden würde, herausgefiltert werden. Der Lichtfilter ist zweckmäßigerweise auf die Frequenz der Laserquelle abgestimmt.

Eine zeitlich präzise bestimmbare Aussendung eines leistungsstarken Sendepulses kann durch mehrere Sendeempfangslichtleiter erreicht werden, die jeweils ein Lichtverstärkerelement umfassen, das durch die Laserquelle optisch aktivierbar ist. Durch einen von der Laserquelle ausgesandten Sendepuls können die Lichtverstärkerelemente zeitgleich aktiviert werden, so dass ein zeitlich präzise definierbarer Sendepuls in den Sendeempfangslichtleitern entsteht. Eine solche zeitsynchronisierte Aktivierung kann durch eine Abregung von angeregten Elektronen in einem kleinen Zeitintervall erfolgen. Das Licht aus der Laserquelle ist durch einen oder mehrere Sendelichtleiter in die Sendeempfangslichtleiter koppelbar.

Ein weiterer Vorteil wird erreicht, wenn eine Pumpquelle zur Anregung der Lichtverstärkerelemente vorgesehen ist. Durch das gemeinsame Pumpen mehrerer Lichtverstärkerelemente durch eine Pumpquelle können Bauelemente und Bauraum eingespart werden. Zweckmäßigerweise sind mehrere Pumpquellen vorgesehen, die gemeinsam mehrere Elemente pumpen, beispielsweise drei Pumpquellen für neun Lichtverstärkerelemente.

Eine räumlich präzise und flexible Ausrichtung eines das Lasermessgerät verlassenden Sendepulses kann durch einen mit dem Sendeempfangslichtleiter verbundenen optischen Multiplexer erreicht werden, der mit mehreren weiteren Sendeempfangslichtleitern verbunden ist. Hierbei sind die weiteren Sendeempfangslichtleiter vorteilhafterweise zur Abstrahlung des Sendepulses in unterschiedliche Raumrichtungen vorgesehen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Modul für ein Lasermessgerät,
- Fig. 2: mehrere Sendeempfangslichtleiter mit jeweils einem Lichtverstärkerelement und
- Fig. 3: einen optischen Multiplexer mit mehreren Sendeempfangslichtleitern.

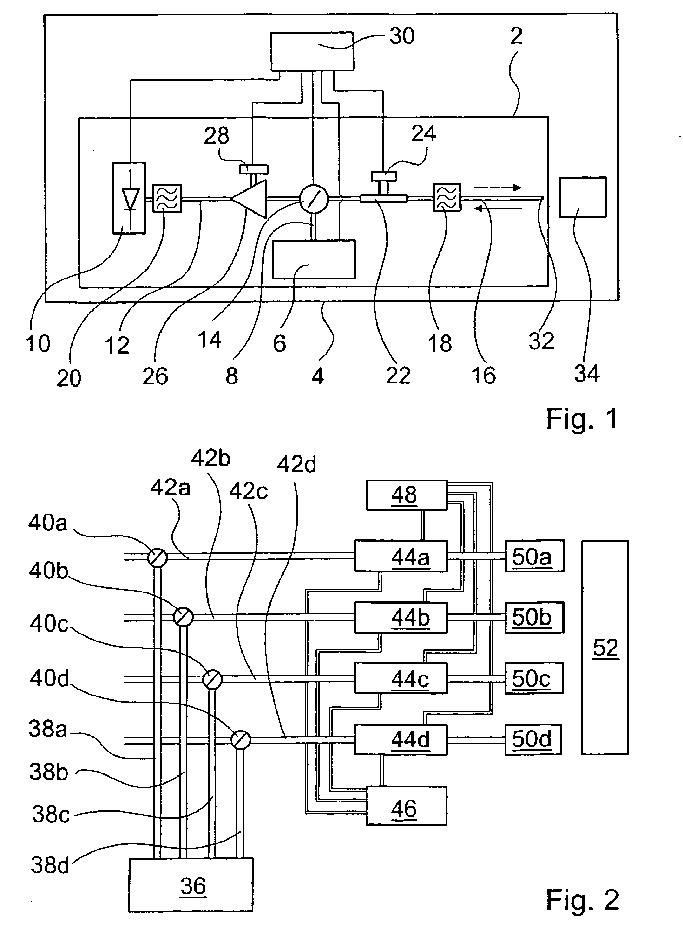

Figur 1 zeigt ein Modul 2 für ein Lasermessgerät 4 mit einer als Masteroszillator dienenden Laserquelle 6, einem mit der Laserquelle 6 verbundenen optischen Sendelichtleiter 8, einem Laserdetektor 10 und einem mit dem Laserdetektor 10 optisch verbundenen Empfangslichtleiter 12. Außerdem umfasst das Modul 2 ein Koppelelement 14, das von der Laserquelle 6 erzeugte Laserstrahlung aus dem Sendelichtleiter 8 in einen mehrmodigen Sendeempfangslichtleiter 16 einkoppelt. Am Sendeempfangslichtleiter 16 und am Empfangslichtleiter 12 ist jeweils ein Lichtfilter 18, 20 angeordnet. Die Lichtfilter 18, 20 erlauben jeweils eine Transmission in einen schmalen Frequenzbereich, der um die Sendefrequenz der Laserquelle 6 liegt.

Ein Teil des Sendeempfangslichtleiters 16 ist als Lichtverstärkerelement 22 in Form einer Verstärkerfaser ausgestaltet, die mit einer Pumpquelle 24 verbunden ist. Im Empfangslichtleiter 12 ist ein Verschlusselement 26 in Form eines Halbleiterbausteins angeordnet, der mit einer weiteren Pumpquelle 28 verbunden ist. Eine Steuereinheit 30 ist mit dem Laserdetektor 10, den Pumpquellen 24, 28, dem Koppelement 14, und der Laserquelle 6 zur Steuerung der jeweiligen Elemente elektrisch verbunden.

Zur Durchführung einer Messung mit dem Lasermessgerät 4 oder zur Aufnahme eines Pixels einer Abbildung einer das Lasermessgerät 4 umgebenden Objektszene wird ein Lichtpuls von der Laserquelle 6 ausgesandt. Der Lichtpuls wird durch den Sendelichtleiter 8 zum Koppelement 14 gelenkt, das als Flipping Pixel bzw. Flixel ausgestaltet ist. Das Flixel befindet sich in einem quasi geschlossenen Zustand, in dem der Sendepuls vom Flixel reflektiert wird, und zwar in den Sendeempfangslichtleiter 16 hinein. Dort trifft der Sendepuls auf das als Verstärkerfaser ausgebildete Lichtverstärkerelement 22. Das Lichtverstärkerelement 22 befindet sich zu diesem Zeitpunkt in einem gepumpten Zustand, in dem durch Energieeinstrahlung der Pumpquelle 24 in das Lichtverstärkerelement 22 eine große Anzahl von Elektronen im Lichtverstärkerelement 22 in einem energetisch erhöhten Niveau angeregt sind. Die Zustände werden durch den Sendepuls stimuliert abgeregt, wodurch der Sendepuls verstärkt wird. Das Sendelicht durchtritt den Lichtfilter 18 und ein Ende 32 des Sendeempfangslichtleiters 16, das sich nahe der Brennebene eines Teleskops 34 befindet. Das Sendelicht wird kollimiert und über die Apertur des Teleskops 34 in eine Umgebung des Lasermessgeräts 4 ausgesandt.

An einem Objekt aus der das Lasermessgerät 4 umgebenden Objektszene wird das Sendelicht reflektiert, so dass ein Empfangssignal auf der Apertur des Teleskops 34 auftrifft. Von dort wird das Empfangssignal auf das Ende 32 des Sendeempfangslichtleiters 16 fokussiert und tritt in den Sendeempfangslichtleiter 16 ein. Das Empfangssignal passiert den Lichtfilter 18 und wird analog wie der Sendepuls durch das Lichtverstärkerelement 22 verstärkt. Anschließend trifft das verstärkte Empfangssignal auf das Koppelelement 14, das nun seinen geöffneten Zustand aufweist, so dass das Empfangssignal das Koppelelement 14 im Wesentlichen ungehindert passieren kann.

Während das Verschlusselement 26 in der Zeitspanne des Aussendens des Sendepulses in einem nicht gepumpten Zustand und somit im Wesentlichen lichtundurchlässig war, ist das Verschlusselement 26 bei Eintreffen des verstärkten Empfangssignals in einem gepumpten Zustand und somit durchlässig für das Empfangssignal, das durch das Verschlusselement 26 nochmals verstärkt wird. Das verstärkte Empfangssignal durchtritt den Lichtfilter 20 und trifft auf dem Laserdetektor 10 auf und wird von dessen für infrarote Strahlung empfindlichen Diodendetektorelement in einen auswertbaren Spannungspuls umgewandelt. Der Spannungspuls wird der Steuereinheit 30 zugeleitet und dort ausgewertet. Nach erfolgtem Durchtritt des Empfangssignals durch das Verschlusselement 26 wird dieses nicht weiter gepumpt und somit im Wesentlichen lichtundurchlässig. Das Flixel des Koppelelements 14 schaltet in den reflektierenden Zustand, und die Laserquelle 6 sendet einen erneuten Sendelichtpuls aus.

Figur 2 zeigt einen Ausschnitt eines alternativen Moduls für ein Lasermessgerät mit einer Laserquelle 36, die mit vier Sendelichtleitern 38a-38d verbunden ist. Ein von der Laserquelle 36 erzeugter Sendepuls ist durch vier Koppelelemente 40a-d in jeweils einen Sendeempfangslichtleiter 42a-d einkoppelbar, der jeweils ein als Faserverstärker ausgebildetes Lichtverstärkerelement 44a-d umfasst. Die Sendeempfangslichtleiter 42a-d sind über die Koppelelemente 40a-d über jeweils einen Empfangslichtleiter mit einem oder mehreren nicht gezeigten Detektoren verbunden. Jedes der Lichtverstärkerelemente 44a-d ist mit zwei Pumpquellen 46, 48 verbunden, die zum gemeinsamen Pumpen der vier Lichtverstärkerelemente 44a-d vorgesehen sind.

Während des Betriebs wird ein Sendelichtpuls von der Laserquelle 36 erzeugt und zeitgleich über die Sendelichtleiter 38a-d und die Koppelelemente 40a-d in die Sendeempfangslichtleiter 42a-d eingespeist. Die nunmehr vier Sendelichtpulse werden synchron durch die vier Lichtverstärkerelemente 44a-d verstärkt und erreichen zeitgleich jeweils einen Kollimator 50a-d. Jeweils kollimiert treten die Sendelichtpulse in eine Optik 52 und werden von dieser in vier benachbarte Ausschnitte einer das Lasermessgerät umgebenden Objektszene gelenkt. Von einem Objekt reflektiert treten jeweils vier Empfangssignale durch die Optik 52 und die Kollimatoren 50a-d in die Sendeempfangslichtleiter 42a-d, werden dort verstärkt und durch die transparenten Koppelelemente 40a-d jeweils einer Detektorzelle eines nicht gezeigten Detektors zugeleitet und durch eine Steuereinheit 30 ausgewertet. Durch die Aussendung von vier Sendelichtpulsen kann die räumliche Ausgestaltung eines interessierenden Objekts einer Objektszene abgetastet werden.

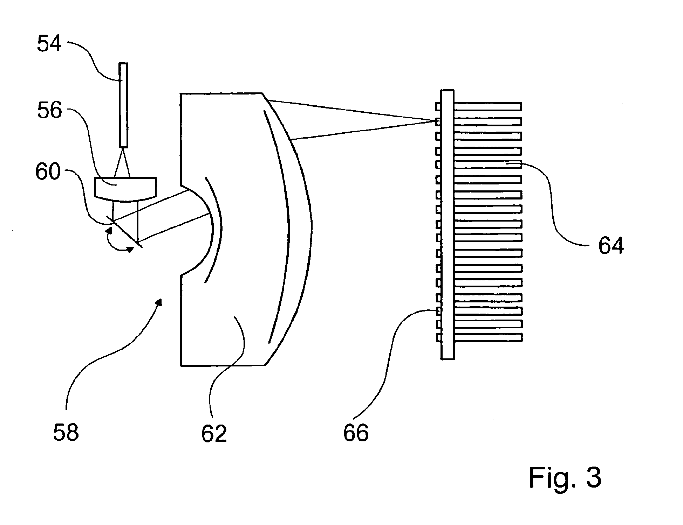

Ein Ausschnitt eines weiteren Moduls eines Lasermessgeräts ist in Figur 3 gezeigt. Das Ende eines analog zu Figur 1 ausgestalteten Sendeempfangslichtleiters 54 ist in räumlicher Nähe zu einer Linse 56 eines optischen Multiplexers 58 angeordnet. Die Linse 56 dient zur Kollimation der im Wesentlichen ungerichtet aus dem mehrmodigen Sendeempfangslichtleiter 54 austretenden Sendepulses. Der kollimierte Strahl des Sendepulses wird über einen Drehspiegel 60 in ein Objektiv 62 eingekoppelt. Dieses Objektiv 62, beispielsweise ein telezentrisches F-Theta-Objektiv, fokussiert den kollimierten Sendepuls unabhängig von dessen Winkel zur optischen Achse des Objektivs 62 auf eine Objektebene. In dieser Objektebene sind eine Vielzahl von Leiterenden 66 von Sendeempfangslichtleitern 64 linear oder als zweidimensionales Feld angeordnet, in die der Sendepuls eingekoppelt wird. In Abhängigkeit von der Drehposition des Drehspiegels 60 wird auf diese Weise das aus dem Sendeempfangslichtleiter 54 austretende Strahlenbündel gezielt in einen gewünschten der Sendeempfangslichtleiter 64 eingekoppelt. Durch den telezentrischen, optisch parallelen Strahlengang des Objektivs 62 wird, unabhängig von der Wahl eines der Sendeempfangslichtleiter 64, eine gleichmäßig hohe Einkoppeleffizienz in den jeweiligen Sendeempfangslichtleiter 64 erreicht.

Der Drehspiegel 60 und das Objektiv 62 können so ausgestaltet sein, dass das Eingangsstrahlenbündel des Sendepulses in eine lineare Anordnung von Lichtleitern einkoppelbar ist. Es ist auch denkbar, dass der Drehspiegel 60 und das Objektiv 62 zur Umlenkung der Eingangsstrahlung in zwei Achsen geeignet sind, so dass die Strahlung in ein zweidimensionales Feld von Leiterenden 66 der Sendeempfangslichtleiter 64 eingekoppelt werden kann. Durch eine entsprechende, in Figur 3 nicht gezeigte Optik kann ein in einen Sendeempfangslichtleiter 64 eingekoppelter Sendelichtpuls in einen gewünschten Ausschnitt einer Objektszene ausgerichtet werden. Hierdurch kann mit Hilfe des Multiplexers 58 ein Sendelichtpuls aus dem Sendeempfangslichtleiter 54 gezielt in einen gewünschten Ausschnitt ausgerichtet und von dort mit Hilfe der Optik empfangen und durch den Multiplexer 58 in den Sendeempfangslichtleiter 54 eingespeist werden.

### Bezugszeichen

- 2: Modul
- 4: Lasermessgerät
- 6: Laserquelle
- 8: Sendelichtleiter
- 10: Laserdetektor
- 12: Empfangslichtleiter
- 14: Koppelelement
- 16: Sendeempfangslichtleiter
- 18: Lichtfilter
- 20: Lichtfilter
- 22: Lichtverstärkerelement
- 24: Pumpquelle
- 26: Verschlusselement
- 28: Pumpquelle
- 30: Steuereinheit
- 32: Ende
- 34: Teleskop
- 36: Laserquelle
- 38a-d: Sendelichtleiter
- 40a-d: Koppelelement
- 42a-d: Sendeempfangslichtleiter
- 44a-d: Lichtverstärkerelement
- 46: Pumpquelle
- 48: Pumpquelle
- 50a-d: Kollimator
- 52: Optik
- 54: Sendeempfangslichtleiter
- 56: Linse
- 58: Multiplexer
- 60: Drehspiegel
- 62: Objektiv
- 64: Sendeempfangslichtleiter
- 66: Leiterende

## Patentansprüche

1. Modul (2) für ein Lasermessgerät (4) mit einer gepulsten Laserquelle (6, 36), einem mit der Laserquelle (6, 36) optisch verbundenen Sendelichtleiter (8, 38a-d), einem Laserdetektor (10), einem mit dem Laserdetektor (10) optisch verbundenen Empfangslichtleiter (12), einem Sendeempfangslichtleiter (16, 42a-d, 54) und einem Koppelelement (14, 40a-d), das ein erstes Ende des Sendeempfangslichtleiters (16, 42a-d, 54) über den Sendelichtleiter (8, 38a-d) mit der Laserquelle (6, 36) und über den Empfangslichtleiter (12) mit dem Laserdetektor (10) optisch verbindet,
**dadurch gekennzeichnet, dass**
das Koppelelement (14, 40a-d) ein Schaltelement ist, welches eingerichtet ist, den Empfangslichtfeiter (12) dann vom Sendeempfangslichtleiter (16, 42a-d, 54) optisch zu trennen, wenn über den Sendelichtleiter (8, 38a-d) und das Koppelelement (14, 40a-d) ein Lichtpuls der Laserquelle (6, 36) in das erste Ende des Sendeempfangslichtleiters (16, 42a-d, 54) eingekoppelt wird,
wobei der Sendeempfangslichtleiter (16, 42a-d, 54) mit einem Lichtverstärkerelement (22) wirkungsmäßig verbunden ist, welches eingerichtet ist, Licht im Sendeempfangslichtleiter (16, 42a-d, 54) zu verstärken.

2. Modul (2) nach Anspruch 1,
**dadurch gekennzeichnet, dass**
das Koppelelement (14, 40a-d) eingerichtet ist, dann einen geöffneten Zustand aufzuweisen, wenn ein Empfangssignal in Form eines vom Lasermessgerät (4) ausgesandten und an einem Objekt aus der das Lasermessgerät (4) umgebenden Objektszene reflektierten Signals in ein zweites Ende (32) des Sendeempfangslichtleiter (16, 42a-d, 54) eingekoppelt worden ist, so dass das Empfangssignal das Koppelelement (14, 40a-d) im Wesentlichen ungehindert passieren kann und über den Empfangslichtleiter (12) zum Laserdetektor (10) gelangen kann.

3. Modul (2) nach Anspruch 1 oder 2,
**dadurch gekennzeichnet, dass**
das Koppelelement (14, 40a-d) ein optischer Zirkulator ist, der zeitlich hintereinander entweder die optische Verbindung zwischen dem Sendelichtleiter (8, 38a-d) und dem Sendeempfangslichtleiter (16, 42a-d, 54) oder zwischen dem Sendeempfangslichtleiter (16, 42a-d, 54) und dem Empfangslichtleiter (12) zulässt.

4. Modul (2) nach einem der vorhergehenden Ansprüche,
**dadurch gekennzeichnet, dass**
das Koppelelement (14, 40a-d) ein mikrooptisches, insbesondere ein mikrooptamechanisches Element umfasst.

5. Modul (2) nach einem der vorhergehenden Ansprüche,
**dadurch gekennzeichnet, dass**
der Sendeempfangslichtleiter (16, 42a-d, 54) ein Mehrmodenleiter ist.

6. Modul (2) nach einem der vorhergehenden Ansprüche,
**dadurch gekennzeichnet, dass**
der Empfangslichtleiter (12) ein optisches Verschlusselement (26) umfasst.

7. Modul (2) nach Anspruch 6,
**dadurch gekennzeichnet, dass**
das Verschlusselement (26) ein Lichtverstärker ist.

8. Modul (2) nach einem der vorhergehenden Ansprüche,
**dadurch gekennzeichnet, dass**
am Sendeempfangslichtleiter (16, 54) ein Lichtfilter (18) angeordnet ist.

9. Modul (2) nach einem der vorhergehenden Ansprüche,
**gekennzeichnet durch** mehrere Sendeempfangslichtleiter (42a-d), die jeweils ein Lichtverstärkerelement (44a-d) umfassen, das **durch** die Laserquelle (36) optisch aktivierbar ist.

10. Modul (2) nach Anspruch 9,
**gekennzeichnet durch** eine Pumpquelle (46, 48), die zur Anregung der Lichtverstärkerelemente (44a-d) vorgesehen ist.

11. Modul (2) nach einem der vorhergehenden Ansprüche,
**gekennzeichnet durch** einen mit dem Sendeempfangslichtleiter (54) verbundenen optischen Multiplexer (58), der mit mehreren weiteren Sendeempfangslichtleitem (64) verbunden ist.

## Claims

1. Module (2) for a laser measuring device (4) comprising a pulsed laser source (6, 36), a transmission optical waveguide (8, 38a-d) optically connected to the laser source (6, 36), a laser detector (10), a reception optical waveguide (12) optically connected to the laser detector (10), a transmission-reception optical waveguide (16, 42a-d, 54) and a coupling element (14, 40a-d), which optically connects a first end of the transmission-reception optical waveguide (16, 42a-d, 54) to the laser source (6, 36) via the transmission optical waveguide (8, 38a-d) and to the laser detector (10) via the reception optical waveguide (12),
**characterized in that**
the coupling element (14, 40a-d) is a switching element designed to optically isolate the reception optical waveguide (12) from the transmission-reception optical waveguide (16, 42a-d, 54) when a light pulse from the laser source (6, 36) is coupled into the first end of the transmission-reception optical waveguide (16, 42a-d, 54), via the transmission optical waveguide (8, 38a-d) and the coupling element (14, 40a-d),
wherein the transmission-reception optical waveguide (16, 42a-d, 54) is operatively connected to a light amplifier element (22) designed to amplify light in the transmission-reception optical waveguide (16, 42a-d, 54).

2. Module (2) according to Claim 1,
**characterized in that**
the coupling element (14, 40a-d) is designed to have an open state when a reception signal in the form of a signal that is emitted by the laser measuring device (4) for and reflected at an object from the object scene surrounding the laser measuring device (4) has been coupled into a second end (32) of the transmission-reception optical waveguide (16, 42a-d, 54), such that the reception signal can pass through the coupling element (14, 40a-d) substantially in an unimpeded manner and can pass to the laser detector (10) via the reception optical waveguide (12).

3. Module (2) according to Claim 1 or 2,
**characterized in that**
the coupling element (14, 40a-d) is an optical circulator which permits temporally successively the optical connection either between the transmission optical waveguide (8, 38a-d) and the transmission-reception optical waveguide (16, 42a-d, 54) or between the transmission-reception optical waveguide (16, 42a-d, 54) and the reception optical waveguide (12).

4. Module (2) according to any of the preceding claims,
**characterized in that**
the coupling element (14, 40a-d) comprises a micro-optical, more particularly a micro-optomechanical, element.

5. Module (2) according to any of the preceding claims,
**characterized in that**
the transmission-reception optical waveguide (16, 42a-d, 54) is a multimode waveguide.

6. Module (2) according to any of the preceding claims,
**characterized in that**
the reception optical waveguide (12) comprises an optical shutter element (26).

7. Module (2) according to Claim 6,
**characterized in that**
the shutter element (26) is a light amplifier.

8. Module (2) according to any of the preceding claims,
**characterized in that**
a light filter (18) is arranged at the transmission-reception optical waveguide (16, 54).

9. Module (2) according to any of the preceding claims,
**characterized by** a plurality of transmission-reception optical waveguides (42a-d) each comprising a light amplifier element (44a-d) which can be optically activated by the laser source (36).

10. Module (2) according to Claim 9,
**characterized by** a pump source (46, 48) provided for the excitation of the light amplifier elements (44a-d).

11. Module (2) according to any of the preceding claims,
**characterized by** an optical multiplexer (58) connected to the transmission-reception optical waveguide (54) and connected to a plurality of further transmission-reception optical waveguides (64).

## Revendications

1. Module (2) pour un appareil de mesure laser (4) avec une source laser pulsée (6, 36), avec un conduit de lumière d'émission (8, 38a-d) optiquement relié à la source laser (6, 36), avec un détecteur laser (10), avec un conduit de lumière de réception (12) optiquement relié un détecteur laser (10), avec un conduit de lumière d'émission réception (16, 42a-d, 54) et un élément de couplage (14, 40a-d), qui relie optiquement une première extrémité du conduit de lumière d'émission réception (16, 42a-d, 54) à la source laser (6, 36) par l'intermédiaire du conduit de lumière d'émission (8, 38a-d) et au détecteur laser (10) par l'intermédiaire du conduit de lumière de réception (12),
**caractérisé en ce que** l'élément de couplage (14, 40a-d) est un élément de commutation installé pour séparer optiquement le conduit de lumière de réception (12) du conduit de lumière d'émission réception (16, 42a-d, 54) lorsqu'une impulsion lumineuse de la source laser (6, 38) est couplée en entrée dans la première extrémité du conduit de lumière d'émission réception (16, 42a-d, 54) par l'intermediaire du conduit de lumière d'émission (8, 38a-d) et de l'élément de couplage (14, 40a-d),
le conduit de lumière d'émission réception (16, 42a-d, 54) étant relié de manière active à un élément amplificateur de lumière (22) installé pour amplifier la lumière dans le conduit de lumière d'émission réception (16, 42a-d, 54).

2. Module (2) selon la revendication 1,
**caractérisé en ce que** l'élément de couplage (14, 40a-d) est installé pour présenter un état ouvert lorsqu'un signal de réception, sous la forme d'un signal émis par l'appareil de mesure laser (4) et réfléchi sur un objet de la scène objet environnant l'appareil de mesure laser (4), a été couplé en entrée dans une deuxième extrémité (32) du conduit de lumière d'émission réception (16, 42a-d, 54) de telle sorte que le signal de réception puisse traverser pour l'essentiel librement l'élément de couplage (14, 40a-d) et pour parvenir au détecteur laser (10) par l'intermédiaire du conduit de lumière de réception (12).

3. Module (2) selon la revendication 1 ou 2,
**caractérisé en ce que** l'élément de couplage (14, 40a-d) est un circulateur optique autorisant successivement dans le temps la liaison optique soit entre le conduit de lumière d'émission (8, 38a-d) et le conduit de lumière d'émission réception (16, 42a-d, 54), soit entre le conduit de lumière d'émission réception (16, 42a-d, 54) et le conduit de lumière de réception (12).

4. Module (2) selon une des revendications précédentes,
**caractérisé en ce que** l'élément de couplage (14, 40a-d) comporte un élément micro-optique, notamment un élément micro-opto-mécanique.

5. Module (2) selon une des revendications précédentes,
**caractérisé en ce que** le conduit de lumière d'émission réception (16, 42a-d, 54) est un conduit multimodes.

6. Module (2) selon une des revendications précédentes,
**caractérisé en ce que** le conduit de lumière de réception (12) comporte un élément vanne optique (26).

7. Module (2) selon la revendication 6,
**caractérisé en ce que** l'élément vanne optique (26) est un amplificateur de lumière.

8. Module (2) selon une des revendications précédentes,
**caractérisé en ce qu'**un filtre de lumière (18) est disposé sur le conduit de lumière d'émission réception (16, 54).

9. Module (2) selon une des revendications précédentes,
**caractérisé par** plusieurs conduits de lumière d'émission réception (42a-d) comportant chacun un élément amplificateur de lumière (44a-d) pouvant être activé optiquement par la source laser (36).

10. Module (2) selon la revendication 9,
**caractérisé par** une source de pompage (46, 48) prévue pour l'excitation des éléments amplificateurs de lumière (44a-d).

11. Module (2) selon une des revendications précédentes,
**caractérisé par** un multiplexeur optique (58) relié au conduit de lumière d'émission réception (54), et relié à plusieurs autres conduits de lumière d'émission réception (64).
